(19) Europäisches Patentamt
European Patent Office
Office européen des brevets

(11) **EP 2 235 782 B1**

## (12) EUROPEAN PATENT SPECIFICATION

(45) Date of publication and mention
of the grant of the patent:
**13.06.2018 Bulletin 2018/24**

(21) Application number: **09703523.2**

(22) Date of filing: **23.01.2009**

(51) Int Cl.:
*H01M 10/0562* (2010.01)   *H01M 10/052* (2010.01)
*C04B 35/58* (2006.01)     *H01B 1/12* (2006.01)
*C04B 35/447* (2006.01)

(86) International application number:
**PCT/US2009/031815**

(87) International publication number:
**WO 2009/094524 (30.07.2009 Gazette 2009/31)**

(54) **THIN FILM ELECTROLYTE FOR THIN FILM BATTERIES**

DÜNSCHICHTELEKTROLYT FÜR DÜNNSCHICHTBATTERIEN

ELECTROLYTE À FILM MINCE POUR BATTERIES À FILM MINCE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **23.01.2008 US 22904**

(43) Date of publication of application:
**06.10.2010 Bulletin 2010/40**

(73) Proprietor: **Sapurast Research LLC
Wilmington, DE 19801 (US)**

(72) Inventor: **NEUDECKER, Bernd J.
Littleton
Colorado 80127 (US)**

(74) Representative: **Barnfather, Karl Jon et al
Withers & Rogers LLP
4 More London Riverside
London SE1 2AU (GB)**

(56) References cited:
EP-A1- 1 667 272        JP-A- 2005 038 844
US-A1- 2002 004 167     US-A1- 2004 101 761
US-A1- 2006 063 074     US-A1- 2007 141 468
US-A1- 2007 298 326     US-A1- 2008 003 493

• AMATUCCI G G ET AL: "Lithium scandium phosphate-based electrolytes for solid state lithium rechargeable microbatteries", SOLID STATE IONICS, NORTH HOLLAND PUB. COMPANY. AMSTERDAM; NL, NL, vol. 60, no. 4, 1 April 1993 (1993-04-01), pages 357-365, XP025776227, ISSN: 0167-2738, DOI: 10.1016/0167-2738(93)90015-U [retrieved on 1993-04-01]
• GUOQIANG TAN ET AL: "Magnetron Sputtering Preparation of Nitrogen-Incorporated Lithium-Aluminum-Titanium Phosphate Based Thin Film Electrolytes for All-Solid-State Lithium Ion Batteries", JOURNAL OF PHYSICAL CHEMISTRY C, vol. 116, no. 5, 9 February 2012 (2012-02-09), pages 3817-3826, XP055142790, ISSN: 1932-7447, DOI: 10.1021/jp207120s

**EP 2 235 782 B1**

## Description

## FIELD OF THE INVENTION

The present invention relates to a solid-state lithium-ion thin-film electrolyte with, for example, increased lithium ion conductivity that lends itself preferably to higher power performance and extended shelf life in thin-film batteries and a method of fabricating the electrolyte.

## BACKGROUND OF THE INVENTION

Solid-state lithium-ion thin-film batteries (TFBs) that are configured with a Lipon (Lithium phosphorus oxynitride-a potent lithium-ion thin-film electrolyte having the formula of $\sim Li_{3.1}PO_{3.3}N_{0.5}$) electrolyte exhibit acceptable internal cell resistances over a wide temperature range while showing electrochemical stability in contact with very reducing electrodes, such as the metallic lithium anode, and very oxidizing electrodes, such as a charged $Li_{0.5}CoO_2$ cathode at 4.2V versus $Li/Li^+$. In addition, Lipon has one of the lowest electronic conductivities of all known room-temperature lithium-ion electrolytes, thereby providing Lipon TFBs with a 10+ year shelf-life and an extremely low capacity loss per year (<1%) under ambient conditions.

Currently known lithium compounds, however, have internal cell impedances that can become undesirably large when Lipon TFBs are operated below 0°C, and in particular when employed in the -40°C range, such as required in military or aerospace applications and by other government agencies. This characteristic is due to the bulk ionic conductivity of the Lipon electrolyte and its charge transfer resistances at both the cathode and the anode interface becoming undesirably large at low temperatures. The inverse of the internal cell impedance, the current rate capability of a cell, for instance, may be rated at 50 mA at 25°C in the 4.2-2.0V voltage window for a standard single-cell 1 $in^2$ TFB while increasing to more than 2000 mA for a few seconds at 100°C, but may be limited to 0.3 mA at -40°C.

From these performance data points, there exists a need to equip TFBs with an alternative, improved solid-state lithium-ion thin-film electrolyte. Particularly, there is a need for an electrolyte that possesses an equal or better electrochemical stability than Lipon versus highly reducing and oxidizing electrodes while providing a substantially enhanced low temperature performance.

"Lithium scandium phosphate-based electrolytes for solid state lithium rechargeable microbatteries", Amatucci G G et al., SOLID STATE IONICS, North Holland Pub. Company. Amsterdam; NL, vol. 60, no. 4, pages 357 - 365, relates to $Li_3Sc_2(PO_4)_3$ as a candidate for use as an electrolyte in solid state lithium rechargeable microbatteries.

Patent application EP1667272 (A1) relates to a solid electrolyte represented by a general formula: $Li_aP_b$-$M_cO_dN_e$, where M is at least one element selected from the group consisting of Si, B, Ge, Al, C, Ga and S, and a, b, c, d and e respectively satisfy a = 0.62 to 4.98, b = 0.01 to 0.99, c = 0.01 to 0.99, d = 1.070 to 3.985, e = 0.01 to 0.50, and b+c = 1.0.

Patent application US2008003493 (A1) relates to a method including providing a hermetic barrier package for a thin film battery that includes an anode expansion absorbing structure and at least one film getter.

## SUMMARY OF THE INVENTION

The present invention provides a solid-state, inorganic electrolyte and a method for fabricating such an electrolyte as defined in the appended claims.

The solid-state thin-film electrolyte of the present invention preferably exhibits, for example when compared to Lipon, an equal or larger electrochemical stability window (0-5.5 V vs. $Li^+/Li$), an equal or smaller electronic conductivity ($10^{-14}$ S/cm at 25°C), the same ideal transference number for $Li^+$ ions (t = 1.000), and an equal or higher $Li^+$ ion conductivity over the entire envisioned operation range of the battery (-50°C to +200°C).

In one embodiment of the present invention, a solid-state, inorganic electrolyte with glassy or amorphous morphology shows a lithium-ion conductivity of greater than $5*10^{-6}$ S/cm at 25°C and has a chemical composition comprising at least the elements lithium, oxygen, nitrogen, and at least one element selected from the group of aluminum, silicon, phosphorus, sulfur, scandium, yttrium, lanthanum, zirconium, magnesium, and calcium. In a further embodiment, this electrolyte may be chemically stable in contact with metallic lithium. The electrolyte may also be chemically stable in contact with positive cathode materials that are charged to at least +3.9V versus a metallic lithium reference electrode.

In another embodiment, the electrolyte may comprise a thickness of less than 5 $\mu$m. In a further embodiment, the electrolyte may comprise a change in chemical composition between one electrolyte interface and the opposing other.

In another embodiment of the present invention, a method for fabricating, by physical vapor deposition (PVD), a solid-state, inorganic electrolyte is described. The method may be utilized to fabricate an electrolyte with glassy or amorphous morphology with lithium ion conductivity of greater than $5*10^{-6}$ S/cm at 25°C and a chemical composition comprising at least the elements lithium, oxygen, nitrogen, and at least one element selected from the group of aluminum, silicon, phosphorus, sulfur, scandium, yttrium, lanthanum, zirconium, magnesium, and calcium. The method may further comprise changing the chemical composition of the electrolyte from one electrolyte interface to the other.

In another embodiment of the present invention, a specific glassy or amorphous electrolyte with the composition $Li_3(Sc_{2-x}M_x)(PO_{4-y}N_z)_3$ wherein M = Al and/or

Y, $x \leq 2$, $0 < z \leq 8/3$, and $2y = 3z$ is provided, as described herein in greater detail below.

In yet another embodiment of the present invention, a specific glassy or amorphous electrolyte with the composition $Li_{8-3.5x}P_{1.5x}Zr_{1-x}O_{6-y}N_z$ wherein $x \leq 0.8$, $z \leq 4$, and $2y = 3z$ is provided, as described herein in greater detail below.

In yet another embodiment of the present invention, a specific glassy or amorphous electrolyte with the composition $Li_{8-3x}La_xZrO_{6-y}N_z$ wherein $0 < x \leq 2$, $z \leq 4$, $2y = 3z$ is provided, as described herein in greater detail below.

In yet another embodiment of the present invention, a specific glassy or amorphous electrolyte with the composition $Li_{6-0.75x}P_{1.75x}Zr_{2-2x}O_{7-y}N_z$ wherein $x \leq 0.8$, $z \leq 14/3$, and $2y = 3z$ is provided, as described herein in greater detail below.

In an example not part of the invention, a specific glassy or amorphous electrolyte with the composition $Li_{3-3x}P_{1-x}Al_xO_{4-4x-y}N_{x+z}$ wherein $0 < x \leq 0.6$, $y \leq 1.6$, and $2y = 3z$ is provided, as described herein in greater detail below.

It is to be understood that both the foregoing general description and the following detailed description are exemplary and explanatory only and are not restrictive of the invention, as claimed.

DETAILED DESCRIPTION OF THE INVENTION

It is to be understood that the present invention is not limited to the particular methodology, compounds, materials, manufacturing techniques, uses, and applications described herein, as these may vary. It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Similarly, for another example, a reference to "a step" or "a means" is a reference to one or more steps or means and may include sub-steps and subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

Unless defined otherwise, all technical and scientific terms used herein have the same meanings as commonly understood by one of ordinary skill in the art to which this invention belongs. Preferred methods, techniques, devices, and materials are described, although any methods, techniques, devices, or materials similar or equivalent to those described herein may be used in the practice or testing of the present invention. Structures described herein are to be understood also to refer to functional equivalents of such structures.

A wide electrochemical stability window can preferably be achieved when basing the chemical composition of the electrolyte of the present invention on a group of principal materials that are known to be either thermodynamically stable with, or least kinetically inert against (in other words, a reaction does not occur due to the existence of a large enough activation energy hindrance between the reaction candidates), metallic lithium or highly oxidizing environments or, most preferably, against both. Then, these base materials may be subjected to a combinatorial chemistry screening, that is, specific compositions of PVD fabricated multinary-element electrolyte compositions, and perhaps also multinary phases, of the principal group materials may be tested electrochemically in asymmetric polarization cells (Li/electrolyte/polarizable metal electrode) using the Hebb-Wagner method (see, for instance, Neudecker et al., 143 J. Electrochem. Soc. 2198 (1996) and Yu et al., 144 J. Electrochem. Soc. 524 (1997)) and cyclic voltammetry (see, for instance, Appetecchi et al., 145 J. Electrochem. Soc. 4126 (1998) and Abraham et al., 147 J. Electrochem. Soc. 1251 (2000)).

The PVD combinatorial chemistry screening may be easily and inexpensively accomplished by employing, for example, a magnetron sputter target (sputter-up configuration) that may be composed of a selected and readily available principal material, for instance $Li_3PO_4$, upon which flat pressed powder pellets of one or more different principal materials are placed. The so-constructed multinary element target may then be magnetron-sputtered, which will deposit a specific multinary film composition onto a given substrate.

The group of preferred principal materials comprise, but are not limited to, $Li_5AlO_4$, $Li_4SiO_4$, $Li_2SiO_3$, $Li_3PO_4$, $Li_2SO_4$, $LiScO_2$, $LiYO_2$, $LiLaO_2$, $Li_6Zr_2O_7$, $Li_8ZrO_6$, $Al_2O_3$, $SiO_2$, $P_2O_5$, $Y_2O_3$, $La_2O_3$, $ZrO_2$, $Li_2O$, MgO, and CaO (cf., Neudecker et al., 143 J. Electrochem. Soc. 2198 (1996)). The PVD deposition of these materials may preferably result in predominantly glassy or amorphous thin films (e.g., materials that exhibit a crystallinity / crystallographic long-range order of about 0 - 100 Å or more) whose composition may be further modified and fine-tuned by the introduction of, for example, preferably, nitride doping through variations in the sputter atmosphere, such as, for instance, sputtering in $Ar/N_2$ mixtures.

To maximize the power performance of a thin cell battery, it is preferred to keep the internal cell resistance as small as possible. Thickness of the thin-film electrolyte is one factor that can contribute to internal cell resistance. For example, the internal cell resistance of a Lipon cell at 25°C increases by at least a factor of three

when going from 1μm Lipon to 5μm Lipon. Thus, it is preferable to have an electrolyte layer of a minimum thickness. In addition, thin-film layers are fairly cost-sensitive compared to battery materials/layers fabricated by wet chemistry, such as the cell phone batteries.

An electrolyte in a TFB may, for example, preferably be only about 1μm thick. Due to this thinness, particularly in a TFB that is, for example, equipped with a metallic lithium anode, the electrolyte is preferably not crystalline or exhibit any substantial grain boundary morphology. Such a condition may allow or potentially cause metallic lithium anode material to creep along the electrolyte grain boundaries and eventually reach the cathode, thereby resulting in a short-circuit within the TFB. The reason for this potential creep tendency of metallic lithium along the grain boundaries of the electrolyte lies in the higher impurity concentration and off-composition in those electrolyte locations with which the metallic lithium partially reacts while forming pathways for additional metallic lithium to follow. This creep phenomenon is analogous to dendrite growth in liquid or polymeric electrolyte technology.

Although some embodiments of the present invention contain a single-phase electrolyte material that preferably can withstand direct contact (i.e, among other things, avoid the creeping problem discussed above) to both the highly reducing anode and the highly oxidizing cathode in high-performance TFBs, other embodiments contain a gradiented or stepped thin-film electrolyte composition to serve this purpose. This gradiented or stepped electrolyte may be designed to be stable with, or inert against, metallic lithium at the anode interface while gradienting or step-changing its composition in a suitable manner along its thickness axis, thereby rendering it stable with, or inert against, a highly oxidizing cathode such as, for example, one that is charged to at least +3.9V in comparison to a metallic lithium reference electrode. The gradienting or composition stepping may be accomplished, for example, through sputter depositing the thin-film electrolyte either from one sputter target by changing the sputter gas composition or by using more than one sputter targets over which the growing thin-film electrolyte is placed in a sequential or alternating manner. Relative to the finished electrolyte film, the gradiented principle was realized by Eveready (Jones et al., 53-56 Solid State Ionics 628 (1992)) and ORNL (Bates, U.S. Pat. No. 5,314,765 (1994)) by interposing a protection layer between the reducing anode and the solid state electrolyte, which could be considered an electrolyte with different interface compositions.

A further, in certain circumstances, relatively important or useful property of the electrolyte of the present invention is, for example, its potential increased Li⁺ ion conductivity compared to Lipon. This increased Li⁺ ion conductivity may provide TFBs with a much improved low temperature power performance. The theory for solid-state lithium-ion electrolytes was mainly developed between about 1970-1995; the latter date being associated with the introduction of the Lipon electrolyte into TFBs. In this time frame, papers on entirely inorganic, solid-state Li⁺ ion electrolytes from A.R. West, R.A. Huggins, C.C. Liang, P. Hagenmuller, J. B. Bates, and M. Greenblatt (to name a few) taught certain techniques for building those electrolytes and how to change the parameters of the Li⁺ ion conductivity, which in turn is given by

$$\sigma_{Li+} = A/T * \exp\,(-E_a/RT)$$

wherein $\sigma_{Li+}$ is the Li⁺ ion conductivity at a given temperature T[K], R represents the gas constant while the factor A denotes the pre-exponential factor, a measure for the theoretically maximally achievable Li⁺ ion conductivity. This conductivity would be realized if the activation enthalpy for Li⁺ ion conduction, $E_a$ (chemical barrier inside the electrolyte network for Li⁺ ion conduction), did not exist in the solid-state glass (or crystalline) network of the electrolyte, which then under TFB operation would allow all Li⁺ ion jump attempts from one electrolyte network site to another to become successful.

In the instant thin-film electrolyte compositions of certain embodiments, the activation enthalpy for Li⁺ ion conduction $E_a$ may be reduced by adequate electrolyte network vacancy and interstitial doping approaches (e.g., aliovalent doping of $Li_3PO_4$ with $Li_4SiO_4$) as well as by reducing the pinning electrostatic forces (e.g., replacing some of the more electronegative oxide ions by less electronegative nitride ions, as very successfully realized in Lipon over $Li_3PO_4$) that the Li⁺ ion encounters when moving through the electrolyte network. Because all sputter deposited thin-film electrolyte compositions may, in certain embodiments, be expected to be glassy or amorphous in their as-fabricated state, which by definition is more disordered than their crystalline counterparts, a substantial Li⁺ ion conductivity boost may be anticipated, as previously demonstrated for crystalline $Li_3PO_4$ (Y-W. Hu et al., 11 Materials Research Bulletin, 1227 (1976)) versus sputter deposited glassy $Li_3PO_4$ (Bates et al., 53-56 Solid State Ionics, 647 (1992)).

The additional desirable properties, a low electronic conductivity, a high temperature stability, and a transference number of unity, are preferably given by the specific choice of the principal materials listed above, because they are preferably (i) high-temperature compounds, and so are their multinary derivatives, such as $Li_4SiO_4$ doped $Li_3PO_4$, (ii) strong electronic insulators, and (iii) composed of highly charged, and thus immobile ions except for the singly charged, small and thus very mobile Li⁺ ion, which, for example, results in the Li⁺ ion being the only mobile species in the electrolyte network, which in turn leads to a Li⁺ ion transference number of unity.

As mentioned above, the charge transfer resistances to both the anode and cathode may contribute substantially to the overall cell impedance. One exemplary approach regarding how to limit these cell impedance contributors to a minimum may be to maximize the contact area at the thin-film electrolyte interfaces by optimizing the thin-film deposition process of both the thin-film electrolyte onto the cathode and subsequently the anode deposition process onto the thin-film electrolyte surface.

Previously crystalline $Li_3(SC_{2-x}M_x)(PO_4)_3$ (M = $Al^{3+}$, $Y^{3+}$) was found to potentially exhibit $Li^+$ ion conductivities in excess of $10^{-5}$ S/cm at room temperature for x = 0.4, which is approximately more than five times the $Li^+$ ion conductivity of Lipon (Amatucci et al., Solid State Ionics 60 (1993) 357). Through sputter depositing $Li_3(SC_{2-x}M_x)(PO_4)_3$ (M = $Al^{3+}$, $Y^{3+}$), a glassy or amorphous morphology of this electrolyte material may be achieved, which may be beneficial when using it in thin film batteries in conjunction with the metallic lithium anode as explained above while, in addition, the glassiness alone may increase the $Li^+$ ion conductivity of the electrolyte by more than one order of magnitude. In certain embodiments, doping the composition with nitride ions that may replace some of the oxygen ions in the glass network may enhance the $Li^+$ ion conductivity of the thin-film electrolyte through reduction of the activation enthalpy for $Li^+$ ion conduction $E_a$, in addition to rendering the electrolyte material more stable with, or inert against, a metallic lithium anode. Although the use of a single-piece sputter target of this 5 to 7 element material may be preferred, one may sputter deposit from a suitable sputter target in reactive $N_2$ atmosphere, with or without any additional admixed gases such as, for instance, argon. A suitable sputter target may be a readily available $Li_3PO_4$ sputter target onto whose sputter surface a specific number of pressed powder pellets of $Al_2O_3$, $Sc_2O_3$, and $Y_2O_3$ of a given footprint are located in order to attain the desired film composition and electrochemical properties in the Li-Sc-Al-Y-P-O-N system. The resulting, so-deposited, typically glassy, thin-film electrolyte is described to have the composition $Li_3(Sc_{2-x}M_x)(PO_{4-y}N_z)_3$ wherein M = A1 and/or Y, $x \le 2$, $0 < z \le 8/3$, and 2y = 3z.

In another embodiment of the present invention, the parent compound $Li_8ZrO_6$ (cf., e.g., Scholder et al., Zeitschrift für Anorganische und Allgemeine Chemie, Band 362 (1968) 149; Delmas et al., Materials Research Bulletin 14 (1979) 619; Ohno et al., Journal of Nuclear Materials 132 (1985) 222), which is stable against both metallic lithium and high oxidation environments, that is, high positive voltages against a lithium reference electrode, may be aliovalently doped at the cation and anion positions in order to substantially enhance its lithium ionic conductivity. Preferred doping materials comprise $Li_3PO_4$, which can formally be rewritten as "$Li_{4.5}P_{1.5}O_6$", and nitrogen, wherein the latter replaces some of the oxide ions in the so-doped, final compound whose composition is described as (1-x) $Li_8ZrO_6$ * x $Li_{4.5}P_{1.5}O_6$ : N or, more precisely, $Li_{8-3.5x}P_{1.5x}Zr_{1-x}O_{6-y}N_z$ wherein $x \le 0.8$, $z \le 4$, and 2y = 3z.

The nitrogen doping may be accomplished in a thin-film electrolyte that may be fabricated through a reactive sputter deposition from a sputter target material of the composition (1-x) $Li_8ZrO_6$ * x $Li_{4.5}P_{1.5}O_6$ in a reactive $N_2$ atmosphere, with or without any additional admixed gases such as, for instance, argon. This film may be glassy or amorphous and therefore exhibit no substantial grain boundaries, which is the preferred morphology for some embodiments of the thin-film electrolytes as explained above.

Instead of the $Li_3PO_4$ doping approach from above, which aliovalently doped the parent compound at the high-valence position, the zirconium position, one may aliovalently dope $Li_8ZrO_6$ at the lithium position with, for instance, lanthanum, thereby arriving at chemical compositions that is described by $Li_{8-3x}La_xZrO_{6-y}N_z$ wherein $z \le 4$, 2y = 3z, and preferably $0 < x \le 2$.

The nitrogen doping may be accomplished in a thin-film electrolyte that may be fabricated through a reactive sputter deposition from a sputter target material of the composition $Li_{8-3x}La_xZrO_6$ in a reactive $N_2$ atmosphere, with or without any additional admixed gases such as, for instance, argon. This film may be glassy or amorphous and therefore exhibit no substantial grain boundaries, which is the preferred morphology for thin-film electrolytes as explained above.

The substantially glassy or amorphous compound of the present invention $Li_{8-3x}La_xZrO_{6-y}N_z$ wherein $z \le 4$, 2y = 3z, and preferably $0 < x \le 2$ that does not show substantial grain boundaries and thus differs substantially from the specific crystalline Garnet compounds that Weppner et al. describes in WO 2005/085138 A1, US 2007/0148553, and DE 10 2007 030 604 A1. These crystalline Garnet compounds may not be used in thin-film batteries wherein the thin-film electrolyte may be thinner than or equal to 5 $\mu$m. Otherwise, specifically lithium from the anode may creep along the crystalline grain boundaries of this rather thin electrolyte layer and eventually create an electronic leakage current path or even short-circuit with the cathode, resulting in destruction of the thin-film battery. Furthermore, PVD deposited oxide and oxy-nitride films of the present invention typically deposit in glassy or amorphous morphology so that an undesirable heat treatment would be necessary to crystallize these films, which in itself, however, is undesirable for the reasons given above. Notwithstanding the undesired crystalline morphology for thin-film electrolytes, a crystallizing heat treatment may additionally cause an unwanted chemical reaction of the electrolyte with the anode and/or cathode. As previously discussed, crystalline thin-film electrolyte films have numerous drawbacks that are preferably to be avoided. On the other hand, PVD processes, such as magnetron sputter deposition, lead to glassy or amorphous thin-film electrolytes that may not need any further heat treatment but, in view of best TFB operation, may already be their preferred morphological state immediately after their fabrication.

In yet another embodiment of the present invention one may use a related lithium zirconium oxide as a starting compound, such as $Li_6Zr_2O_7$ (cf. Abrahams et al., Journal of Solid State Chemistry 104 (1993) 197), which could be considered to formally consist of $3Li_2O * 2ZrO_2$ or $(1.5Li_2O * ZrO_2)_2$, which therefore possesses only 1.5/4 or 38% of the formal $Li_2O$ residing in $Li_8ZrO_6$, which in turn may formally be described as $4Li_2O * ZrO_2$. When doped with $Li_3PO_4$ and nitrogen, we obtain compounds whose formulae can be represented by $Li_{6-0.75x}P_{1.75x}Zr_{2-2x}O_{7-y}N_z$ wherein $z \leq 14/3$, $2y = 3z$, and preferably $x \leq 0.8$.

Nitrogen doping may be accomplished in a thin-film electrolyte that may be fabricated through a reactive sputter deposition from a sputter target material of the composition $Li_{6-0.75}.P_{1.75x}Zr_{2-2x}O_7$ in a reactive $N_2$ atmosphere, with or without any additional admixed gases such as, for instance, argon. This film may be glassy or amorphous and therefore exhibit no substantial grain boundaries, which is the preferred morphology for thin-film electrolytes as explained above.

An example not part of the invention, relate to AlN doped $Li_3PO_4$, which introduces vacancies at the $Li^+$ ion cation position and the oxygen anion position while replacing some of the $Li^+$ ion pinning, electron rich oxygen ions and their 2p atomic orbitals with the less $Li^+$ ion pinning, less electron rich, 2p nitrogen orbitals, according to the formula $Li_{3-3x}P_{1-x}Al_xO_{4-4x}N_x$ wherein preferably $0 < x \leq 0.6$.

Sputtering AlN doped $Li_3PO_4$ material, for instance, in a reactive $N_2$ atmosphere, with or without any additional admixed gases such as, for instance, argon, may allow the fabrication of an electrolyte film that is further doped with nitrogen and may be described by a composition of $Li_{3-3x}P_{1-x}Al_xO_{4-4x-y}N_{x+z}$ wherein preferably $0 < x \leq 0.6$, $y \leq 1.6$, and $2y = 3z$. This film may be glassy or amorphous and therefore exhibit no substantial grain boundaries, which is the preferred morphology for thin-film electrolytes as explained above.

All of the various compositions of the thin-film electrolyte of the present invention are thermally stable up to at least 150°C while some specific compositions may be thermally stable well above 300°C or even above 500°C. This thermal property may allow the use of the thin-film electrolyte of the present invention in TFBs that are exposed to higher (up to 150°C) to high (above 150°C) temperature environments for extended periods of time, such as days or even months or years. It is to be understood, however, that the thermal stability of a TFB is not solely dependent on the thermal stability of the electrolyte but may also be determined by, for instance, the thermal stability of the packaging of the TFB or the state of charge of the positive cathode material when exposed to higher or high temperatures.

EXAMPLES

Example 1: In a particular embodiment of the present invention, the $Li^+$ ion conductivity of the electrolyte is demonstrated in a conductivity test cell using two sandwiching inert metal electrodes. The electrolyte exhibits an improved activation enthalpy $E_a$ of less than 0.5eV (compared to Lipon $E_a$ = 0.514 eV) that leads to a $Li^+$ ion conductivity of greater than $5*10^{-6}$ S/cm at 25°C. The electrolyte possesses a $Li^+$ ion conductivity at 0°C of $1.48*10^{-6}$ S/cm, which is five times higher than that of Lipon ($2.95*10^{-7}$ S/cm) and ten times higher ($8.1*10^{-8}$ S/cm) at -40°C (Lipon: $8.1*10^{-9}$ S/cm). The electrolyte of the present invention has at least an electrochemical stability window from 0-5.5V vs. $Li^+/Li$ before the electrolyte breaks down and shows a substantial electronic conductivity of more than $1*10^{-6}$ S/cm.

Example 2: In a further embodiment, a 1 in² large TFB fabricated with the electrolyte of the present invention supplies 700 $\mu$Ah at 1/2C rate at 25°C in the voltage range 4.2-2.0V and delivers 250 $\mu$Ah at 100 mA (140C rate) at the same temperature and within the same voltage window. This TFB is fabricated onto 50$\mu$m metal foil substrate, which also serves as the positive terminal, together with 0.5$\mu$m conductive barrier layer, 3.5$\mu$m $LiCoO_2$ positive cathode, 1.2$\mu$m electrolyte of the present invention, ~9$\mu$m Li anode, and a standard metal foil encapsulation.

Example 3: A further embodiment of the present invention encompasses fabricated TFBs that supply 700 $\mu$Ah at 1/2C rate at 25°C in the voltage range 4.2-2.0V and are capable of delivering a continuous current of 0.4 mA within the same voltage window but at -40°C.

Example 4: The thin-film electrolyte of the composition $Li_3(ScAl)(PO_{3.4}N_{0.4})_3$, formally comprising $Li_3PO_4*P_2O_5*1/2 Sc_2O_3*1/2 Al_2O_3$:N, is fabricated in a RF magnetron sputter deposition using "sputter-up" configuration in an 10 mTorr $N_2$ reactive atmosphere onto a graphite substrate by employing a 4 inch diameter $Li_3PO_4$ sputter target whose sputter surface is covered by approximately 33% with about 2mm thick and about 1cm² in diameter large, pressed and sintered powder pellets of $P_2O_5$, by approximately 17% with about 2mm thick and about 1cm² in diameter large, pressed and sintered powder pellets of $Al_2O_3$, and by approximately 17% with about 2mm thick and about 1cm² in diameter large, pressed and sintered powder pellets of $SC_2O_3$. The resulting, deposited thin-film electrolyte film at a distance of 7.5cm from the $Li_3PO_4$ target surface is XRD amorphous and may be analyzed by quantitative EDS and/or quantitative RBS to exhibit a Sc:Al:P:O:N stoichiometric ratio of 1 : 1 : 1 : 3.4 : 0.4. The stoichiometric factor of lithium may be obtained via back-calculation using the chemical electro-neutrality rule and the known formal valence states of Li(+1), Sc(+3), Al(+3), P(+5), O(-2), and N(-3).

Example 5: The thin-film electrolyte of Example 4 may be heat treated in an inert argon atmosphere continuously at 150°C for 7 days without substantially changing its Li:Sc:Al:P:O:N stoichiometric ratio of 3 : 1 : 1 : 1 : 3.4 : 0.4.

The embodiments described above are exemplary only. One skilled in the art may recognize variations from the embodiments specifically described here, which are intended to be within the scope of this disclosure. As such, the invention is limited only by the following claims. Thus, it is intended that the present invention cover the modifications of this invention provided they come within the scope of the appended claims. Further, specific explanations of theories regarding the formation or performance of electrochemical devices according to the present invention are presented for explanation only and are not to be considered limiting with respect to the scope of the present disclosure or the claims.

**Claims**

1. A solid-state, inorganic, electrolyte with glassy or amorphous morphology, said electrolyte having a lithium ion conductivity of greater than $5*10^{-6}$ S/cm at 25°C and comprising a chemical composition selected from:

   (a) $Li_3(Sc_{2-x}M_x)(PO_{4-y}N_z)_3$ wherein $x \leq 2$, $0 < z \leq 8/3$, $2y = 3z$, and M is selected from the group of Al, Y, and $Al_{1-a}Y_a$ wherein $a < 1$;
   (b) $Li_{8-3.5x}P_{1.5x}Zr_{1-x}O_{6-y}N_z$ wherein $x \leq 0.8$, $z \leq 4$, and $2y = 3z$;
   (c) $Li_{8-3.5x}La_xZrO_{6-y}N_z$ wherein $0 < x \leq 2$, $z \leq 4$, and $2y = 3z$; and
   (d) $Li_{6-0.75x}P_{1.75x}Zr_{2-2x}O_{7-y}N_z$ wherein $x \leq 0.8$, $z \leq 14/3$, and $2y = 3z$.

2. The electrolyte of claim 1 wherein the electrolyte is kinetically inert with a metallic lithium anode.

3. The electrolyte of claim 1 wherein the electrolyte is kinetically inert with a positive cathode charged to a potential of at least +3.9V, said potential measured in comparison to a metallic lithium reference electrode.

4. The electrolyte of claim 1 wherein the electrolyte is thermally stable at ambient temperatures up to 150°C.

5. The electrolyte of claim 1 wherein the electrolyte is kinetically inert with metallic lithium at ambient temperatures of up to 150°C.

6. The electrolyte of claim 1 wherein the electrolyte is kinetically inert with positive cathode materials that are charged to a potential of +3.9V at ambient temperatures of up to 150°C, said potential measured in comparison to a metallic lithium reference electrode.

7. The electrolyte of claim 1 wherein a thickness of said electrolyte is less than 5μm.

8. The electrolyte of claim 1, wherein said electrolyte has a crystallinity of 0 - 100 Å.

9. The electrolyte of claim 1, wherein chemical composition (a) further comprises at least one element selected from the group of, silicon, sulfur, lanthanum, zirconium, magnesium and calcium.

10. The electrolyte of claim 1, wherein chemical composition (b) further comprises at least one element selected from the group of aluminum, silicon, sulfur, scandium, yttrium, lanthanum, magnesium and calcium.

11. The electrolyte of claim 1, wherein chemical composition (c) further comprises at least one element selected from the group of aluminum, silicon, phosphorus, sulfur, scandium, yttrium, magnesium and calcium.

12. The electrolyte of claim 1, wherein chemical composition (d) further comprises at least one element selected from the group aluminum, silicon, sulfur, scandium, yttrium, lanthanum, magnesium and calcium.

13. The electrolyte of claim 1, wherein chemical composition (e) further comprises at least one element selected from the group of silicon, sulfur, scandium, yttrium, lanthanum, zirconium, magnesium, and calcium.

14. A method of fabricating a solid-state, inorganic electrolyte of any of the preceding claims, said method comprising:

   providing a vacuum chamber;
   providing at least one deposition substrate in said chamber;
   providing at least one deposition target in said chamber, said at least one deposition target comprising at least one target material;
   providing a deposition gas atmosphere in said vacuum chamber;
   evaporating said at least one target material into said deposition gas atmosphere;
   forming a deposition material within said deposition gas atmosphere; and
   depositing said deposition material onto said at least one deposition substrate;
   whereby said electrolyte has a crystallinity of 0 - 100 Å, whereby said deposited material has a lithium ion conductivity of greater than $5*10^{-6}$ S/cm at 25°C, and

   whereby said deposition material has a chemical composition comprising at least the elements lithium, oxygen, nitrogen, and at least one element selected from the group of aluminum, silicon, phosphorus, sulfur, scandium, yttrium, lanthanum, zirconium, magnesium, and calcium.

15. The method of claim 14 wherein said deposition gas atmosphere comprises materials selected from the group of: argon, nitrogen, oxygen, dinitrogen oxide, and any mixture thereof.

**Patentansprüche**

1. Anorganischer Festkörperelektrolyt mit einer glasartigen oder amorphen Morphologie, wobei der Elektrolyt eine Lithiumionenleitfähigkeit aufweist, die größer ist, als $5*10^{-6}$ S/cm bei 25 °C und eine chemische Zusammensetzung umfasst, die ausgewählt ist aus:

   (a) $Li_3(Sc_{2-x}M_x)(PO_{4-y}N_z)_3$ wobei $x \leq 2$, $0 < z \leq 8/3$, $2y = 3z$ und M ausgewählt ist aus der Gruppe von Al, Y und $Al_{1-a}Y_a$, wobei $a<1$;
   (b) $Li_{8-3.5x}P_{1.5x}Zr_{1-x}O_{6-y}N_z$, wobei $x \leq 0,8$, $z \leq 4$ und $2y = 3z$;
   (c) $Li_{8-3.5x}La_xZrO_{6-y}N_z$, wobei $0< x \leq 2$, $z \leq 4$ und $2y = 3z$; und
   (d) $Li_{6-0.75x}P_{1.75x}Zr_{2-2x}O_{7-y}N_z$, wobei $x \leq 0,8$, $z \leq 14/3$ und $2y = 3z$.

2. Elektrolyt nach Anspruch 1, wobei der Elektrolyt mit einer metallischen Lithiumanode kinetisch inert ist.

3. Elektrolyt nach Anspruch 1, wobei der Elektrolyt mit einer positiven Kathode kinetische inert ist, die mit einem Potential von zumindest +3,9 V geladen ist, wobei das Potential im Vergleich zu einer metallischen Lithiumreferenzelektrode gemessen ist.

4. Elektrolyt nach Anspruch 1, wobei der Elektrolyt bei Umgebungstemperaturen bis zu 150 °C thermisch stabil ist.

5. Elektrolyt nach Anspruch 1, wobei der Elektrolyt mit metallischem Lithium bei Umgebungstemperaturen bis zu 150 °C kinetisch inert ist.

6. Elektrolyt nach Anspruch 1, wobei der Elektrolyt mit positiven Kathodenmaterialien bei Raumtemperaturen bis zu 150°C kinetisch inert ist, die mit einem Potential von +3,9 V geladen sind, wobei das Potential im Vergleich zu einer metallischen Lithiumreferenzelektrode gemessen ist.

7. Elektrolyt nach Anspruch 1, wobei eine Dicke des Elektrolyts kleiner ist als 5 $\mu$m.

8. Elektrolyt nach Anspruch 1, wobei der Elektrolyt eine Kristallinität von 0 bis 100 Å aufweist.

9. Elektrolyt nach Anspruch 1, wobei die chemische Zusammensetzung (a) ferner zumindest ein Element ausgewählt aus der Gruppe Silizium, Schwefel, Lanthan, Zirkonium, Magnesium und Kalzium umfasst.

10. Elektrolyt nach Anspruch 1, wobei die chemische Zusammensetzung (b) ferner zumindest ein Element ausgewählt aus der Gruppe Aluminium, Silizium, Schwefel, Scandium, Yttrium, Lanthan, Magnesium und Kalzium umfasst.

11. Elektrolyt nach Anspruch 1, wobei die chemische Zusammensetzung (c) ferner zumindest ein Element ausgewählt aus der Gruppe Aluminium, Silizium, Phosphor, Schwefel, Scandium, Yttrium, Magnesium und Kalzium umfasst.

12. Elektrolyt nach Anspruch 1, wobei die chemische Zusammensetzung (d) ferner zumindest ein Element ausgewählt aus der Gruppe Aluminium, Silizium, Schwefel, Scandium, Yttrium, Lanthan, Magnesium und Kalzium umfasst.

13. Elektrolyt nach Anspruch 1, wobei die Zusammensetzung (e) ferner zumindest ein Element ausgewählt aus der Gruppe Silizium, Schwefel, Scandium, Yttrium, Lanthan, Zirkonium, Magnesium und Kalzium umfasst.

14. Verfahren zum Herstellen eines anorganischen Festkörperelektrolyten nach irgendeinem der vorhergehenden Ansprüche, wobei das Verfahren umfasst:

   Bereitstellen einer Vakuumkammer;
   Bereitstellen zumindest eines Ablagerungssubstrats in der Kammer;
   Bereitstellen von zumindest einem Ablagerungsziel in der Kammer, wobei das zumindest eine Ablagerungsziel zumindest ein Zielmaterial umfasst;
   Bereitstellen einer Ablagerungsgasatmosphäre in der Vakuumkammer;
   Verdampfen von zumindest einem Zielmaterial in die Ablagerungsgasatmosphäre;
   Bilden eines Ablagerungsmaterials in der Ablagerungsgasatmosphäre; und
   Ablagern des Ablagerungsmaterials auf das zumindest eine Ablagerungssubstrat;
   wobei der Elektrolyt eine Kristallinität von 0 bis 100 Å aufweist, wobei das abgelagerte Material eine Lithiumionenleitfähigkeit von mehr als $5*10^{-6}$ S/cm bei 25 °C aufweist und wobei das Ablagerungsmaterial eine chemische Zusammensetzung von zumindest den Elementen Lithium, Sauerstoff, Stickstoff und zumindest ein Element ausgewählt aus der Gruppe Aluminium, Silizium, Phosphor, Schwefel, Scandium, Yttrium, Lanthan, Zirkonium, Magnesium und Kalzium umfasst.

15. Verfahren nach Anspruch 14, wobei die Ablagerungsgasatmosphäre Material ausgewählt aus der Gruppe Argon, Stickstoff, Sauerstoff, Distickstoffoxid und irgendeine Mischung davon umfasst.

**Revendications**

1. Electrolyte inorganique à l'état solide présentant une morphologie vitreuse ou amorphe, ledit électrolyte ayant une conductivité de l'ion lithium supérieure à $5*10^{-6}$ S/cm à 25 °C et comprenant une composition chimique choisie parmi :

    (a) $Li_3(Sc_{2-x}M_x)(PO_{4-y})N_z)_3$, dans laquelle $x\leq2$, $0<z\leq8/3$, $2y=3z$, et M est choisi dans le groupe consistant en Al, Y et $Al_{1-a}Y_a$, avec $a<1$ ;
    (b) $Li_{8-3,5x}P_{1,5x}Zr_{1-x}O_{6-y}N_z$, dans laquelle $x\leq0,8$, $z\leq4$ et $2y=3z$ ;
    (c) $Li_{8-3,5x}La_xZrO_{6-y}N_z$, dans laquelle $0<x\leq2$, $z\leq4$ et $2y=3z$ ; et
    (d) $Li_{6-0,75x}P_{1,75x}Zr_{2-2x}O_{7-y}N_z$, dans laquelle $x\leq0,8$, $z\leq14/3$ et $2y=3z$.

2. Electrolyte selon la revendication 1, l'électrolyte étant cinétiquement inerte vis-à-vis d'une anode au lithium métallique.

3. Electrolyte selon la revendication 1, l'électrolyte étant cinétiquement inerte vis-à-vis d'une cathode positive chargée à un potentiel d'au moins +3,9 V, ledit potentiel étant mesuré par comparaison avec une électrode de référence au lithium métallique.

4. Electrolyte selon la revendication 1, l'électrolyte étant thermiquement stable aux températures ambiantes allant jusqu'à 150 °C.

5. Electrolyte selon la revendication 1, l'électrolyte étant cinétiquement inerte vis-à-vis du lithium métallique aux températures ambiantes allant jusqu'à 150 °C.

6. Electrolyte selon la revendication 1, l'électrolyte étant cinétiquement inerte vis-à-vis de matériaux de cathode positive qui sont chargés à un potentiel de +3,9 V à des températures ambiantes allant jusqu'à 150 °C, ledit potentiel étant mesuré par comparaison avec une électrode de référence au lithium métallique.

7. Electrolyte selon la revendication 1, une épaisseur dudit électrolyte étant inférieure à 5 μm.

8. Electrolyte selon la revendication 1, ledit électrolyte ayant une cristallinité de 0 à 100 Å.

9. Electrolyte selon la revendication 1, dans lequel la composition chimique (a) comprend en outre au moins un élément choisi dans le groupe consistant en le silicium, le soufre, le lanthane, le zirconium, le magnésium et le calcium.

10. Electrolyte selon la revendication 1, dans lequel la composition chimique (b) comprend en outre au moins un élément choisi dans le groupe consistant en l'aluminium, le silicium, le soufre, le scandium, l'yttrium, le lanthane, le magnésium et le calcium.

11. Electrolyte selon la revendication 1, dans lequel la composition chimique (c) comprend en outre au moins un élément choisi dans le groupe consistant en l'aluminium, le silicium, le phosphore, le soufre, le scandium, l'yttrium, le magnésium et le calcium.

12. Electrolyte selon la revendication 1, dans lequel la composition chimique (d) comprend en outre au moins un élément choisi dans le groupe consistant en l'aluminium, le silicium, le soufre, le scandium, l'yttrium, le lanthane, le magnésium et le calcium.

13. Electrolyte selon la revendication 1, dans lequel la composition chimique (e) comprend en outre au moins un élément choisi dans le groupe consistant en le silicium, le soufre, le scandium, l'yttrium, le lanthane, le zirconium, le magnésium et le calcium.

14. Procédé de fabrication d'un électrolyte inorganique à l'état solide selon l'une quelconque des revendications précédentes, ledit procédé comprenant :

    la fourniture d'une chambre à vide ;
    la fourniture d'au moins un substrat de dépôt dans ladite chambre ;
    la fourniture d'au moins une cible de dépôt dans ladite chambre, ladite au moins une cible de dépôt comprenant au moins un matériau cible ;
    la fourniture d'une atmosphère de gaz de dépôt dans ladite chambre à vide ;
    l'évaporation dudit au moins un matériau cible dans ladite atmosphère de gaz de dépôt ;
    la formation d'un matériau de dépôt à l'intérieur de ladite atmosphère de gaz de dépôt ; et
    le dépôt dudit matériau de dépôt sur ledit au moins un substrat de dépôt ;

    dans lequel ledit électrolyte présente une cristallinité de 0 à 100 Å, ledit matériau déposé présente une conductivité de l'ion lithium supérieure à $5*10^{-6}$ S/cm à 25 °C, et ledit matériau de dépôt présente une composition chimique comprenant au moins les éléments lithium, oxygène, azote et au moins un élément choisi dans le groupe consistant en l'aluminium, le silicium, le phosphore, le soufre, le scandium, l'yttrium, le lanthane, le zirconium, le magnésium et le calcium.

**15.** Procédé selon la revendication 14, dans lequel ladite atmosphère de gaz de dépôt comprend des matériaux choisis dans le groupe consistant en l'argon, l'azote, l'oxygène, le protoxyde d'azote et un mélange quelconque de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1667272 A1
- US 2008003493 A1
- US 5314765 A, Bates
- WO 2005085138 A1
- US 20070148553 A
- DE 102007030604 A1

### Non-patent literature cited in the description

- Lithium scandium phosphate-based electrolytes for solid state lithium rechargeable microbatteries. **AMATUCCI G G et al.** SOLID STATE IONICS. North Holland Pub. Company, vol. 60, 357-365
- **NEUDECKER et al.** *J. Electrochem. Soc.,* 1996, vol. 143, 2198
- **YU et al.** *J. Electrochem. Soc.,* 1997, vol. 144, 524
- **APPETECCHI et al.** *J. Electrochem. Soc.,* 1998, vol. 145, 4126
- **ABRAHAM et al.** *J. Electrochem. Soc.,* 2000, vol. 147, 1251
- **JONES et al.** *Solid State Ionics,* 1992, vol. 53-56, 628
- **Y-W. HU et al.** *Materials Research Bulletin,* 1976, vol. 11, 1227
- **BATES et al.** *Solid State Ionics,* 1992, vol. 53-56, 647
- **AMATUCCI et al.** *Solid State Ionics,* 1993, vol. 60, 357
- **SCHOLDER et al.** *Zeitschrift für Anorganische und Allgemeine Chemie,* 1968, vol. 362, 149
- **DELMAS et al.** *Materials Research Bulletin,* 1979, vol. 14, 619
- **OHNO et al.** *Journal of Nuclear Materials,* 1985, vol. 132, 222
- **ABRAHAMS et al.** *Journal of Solid State Chemistry,* 1993, vol. 104, 197